# EUROPEAN PATENT APPLICATION

(11) **EP 4 742 755 A1**
(43) Date of publication of application: **13.05.2026**
(21) Application number: 24849634.1
(22) Date of filing: 01.08.2024
(51) Int. Cl.: H04W 36/00, H04W 36/06, H04W 56/00, H04W 4/42

(54) **METHOD AND DEVICE FOR UPDATING UPLINK SYNCHRONIZATION IN WIRELESS COMMUNICATION SYSTEM**

(30) Priority: 01.08.2023 KR 20230100350
(71) Applicant: Samsung Electronics Co., Ltd., Suwon-si, Gyeonggi-do 16677 (KR)
(72) Inventor: JIN, Seungri, Suwon-si Gyeonggi-do 16677 (KR); LEE, Taeseop, Suwon-si Gyeonggi-do 16677 (KR)
(74) Representative: Gulde & Partner
(86) International application number: PCT/KR2024/011320
(87) International publication number: WO 2025/029067

(57) **Abstract**

The present disclosure relates to a 5G or 6G communication system for supporting a higher data transmission rate. A method performed by a user equipment (UE) in a wireless communication system, according to various embodiments of the present disclosure, may comprise the steps of: receiving, from a base station, a medium access control (MAC) control element (CE) for indicating the state of a cross-remote radio head (RRH) transmission configuration indicator (TCI); receiving, from the base station, a physical downlink control channel (PDCCH) according to the TCI state indicated by the MAC CE; and performing an uplink (UL) timing adjustment after switching to the TCI state on the basis of the MAC CE, wherein the MAC CE may include an identifier (ID) of the TCI state, and an indicator indicating the UL timing adjustment.

## Description

### [Technical Field]

The disclosure relates to a wireless communication system and, more particularly, to operations of a UE and a base station in a wireless communication system. Specifically, the disclosure relates to a method and an apparatus for updating uplink synchronization together when changing a beam inside a cell in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, various services may be provided as wireless communication systems evolve. Accordingly, there is a need for mechanisms that can support the efficient provision of such services.

### [Disclosure of Invention]

### [Technical Problem]

The disclosure relates to a wireless communication system and, more specifically, to operations of a user equipment and a base station in a wireless communication system. Various embodiments of the disclosure are to provide an apparatus and a method capable of effectively providing services in a wireless communication system.

As one of embodiments of the disclosure, when a UE is on a high-speed train moving at high speed, an operation of changing non-collocated remote radio heads (RRHs) or transmission reception points (TRPs) in one cell is required. In particular, during the change of the corresponding RRHs and TRPs, when transmission and reception beams need to be changed, it is required to specify an operation of simultaneously changing transmission and reception beams, and an operation between a network and a UE therefor, so as to correspond to the RRHs and TRPs to which a beam subject to a change of an uplink timing advance (TA) belongs.

### [Solution to Problem]

According to various embodiments of the disclosure, a method performed by a user equipment (UE) in a wireless communication system may include receiving, from a base station, a medium access control (MAC) control element (CE) for indicating a cross-remote radio head (RRH) transmission configuration indicator (TCI) state, receiving, from the base station, a physical downlink control channel (PDCCH) according to a TCI state indicated by the MAC CE, and based on the MAC CE, performing an uplink (UL) timing adjustment after switching to the TCI state, wherein the MAC CE includes an identifier (ID) of the TCI state and an indicator indicating the UL timing adjustment.

### [Advantageous Effects of Invention]

Embodiments of the disclosure provide an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

According to the disclosure, a method for indicating a change of a physical downlink control channel (PDCCH) reception beam through a medium access control (MAC) control element (CE) and simultaneously updating an uplink TA, during a change to a different RRH/TRP in one cell, is proposed, and accordingly, when a change to an actually co-located RRH/TRP in a single cell is made, the operation can be performed by reflecting the actual uplink TA.

### [Brief Description of Drawings]

FIG. 1 illustrates a structure of a wireless communication system according to various embodiments of the disclosure.
FIG. 2 illustrates a radio protocol structure of a wireless communication system according to various embodiments of the disclosure.
FIG. 3 illustrates another structure of a wireless communication system according to various embodiments of the disclosure.
FIG. 4 illustrates a scenario in which a UE performs a beam change in a high speed train (HST) scenario according to various embodiments of the disclosure.
FIG. 5 illustrates a flow of signals for a UE to automatically adjust an uplink timing advance (TA) according to various embodiments of the disclosure.
FIG. 6 illustrates a flow of signals for triggering random access and adjusting an uplink TA by a UE according to various embodiments of the disclosure.
FIG. 7 illustrates a flow of signals for simultaneously performing beam changing and uplink TA adjustment by a UE according to various embodiments of the disclosure.
FIGS. 8A and 8B illustrate a MAC CE structure for updating an uplink TA together with a beam change according to various embodiments of the disclosure.
FIG. 9 is a flowchart illustrating an operation for adjusting an uplink TA by a UE according to various embodiments of the disclosure.
FIG. 10 is a flowchart illustrating an operation for adjusting an uplink TA of a UE by a base station according to various embodiments of the disclosure.
FIG. 11 illustrates a functional structure of a UE according to various embodiments of the disclosure.
FIG. 12 illustrates a functional structure of a base station according to various embodiments of the disclosure.

### [Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.

As used herein, the term "layer 1/layer 2 (L1/L2)-based mobility support" may be interchangeably used with the term "L1/L2 handover" or "L1/L2 triggered mobility (LTM).

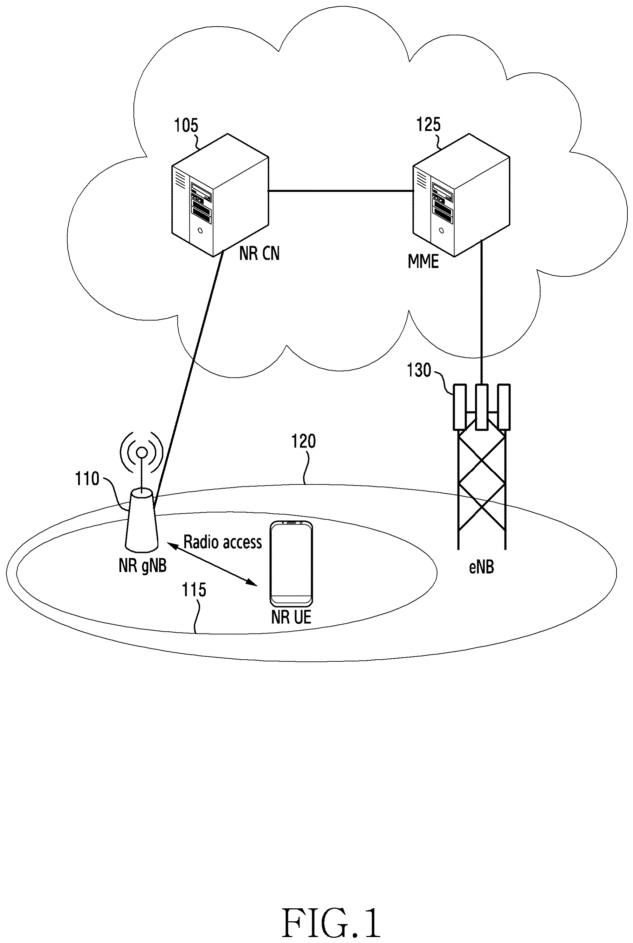

FIG. 1 illustrates a structure of a wireless communication system according to various embodiments of the disclosure.

Referring to FIG. 1, a radio access network of the wireless communication system may include a next-generation base station (new radio Node B, hereinafter NR NB) 110 and a new radio core network (NR CN) (or next generation core network (NG CN)) 105. A user equipment (new radio user equipment, hereinafter NR UE or terminal) 115 may access an external network via the NR NB 110 and the NR CN 105.

In FIG. 1, the NR NB 110 may correspond to an evolved Node B (eNB) of the conventional LTE system. The NR NB 110 is connected to the NR UE 115 through a radio channel and may provide outstanding services as compared to a conventional Node B. In the wireless communication system, since all user traffic is serviced through a shared channel, a device that collects state information, such as buffer statuses, available transmit power states, and channel states of UEs, and performs scheduling accordingly is required, and the NR NB 110 may serve as the device.

In general, one NR NB may control multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter OFDM) as a radio access technology, and may additionally integrate a beamforming technology therewith. Furthermore, the next-generation mobile communication system may employ an adaptive modulation & coding (hereinafter AMC) scheme for determining a modulation scheme and a channel coding rate according to a channel state of a UE.

The NR CN 105 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the conventional LTE system, and the NR CN may be connected to an MME 125 via a network interface. The MME may be connected to an eNB 130 that is an existing base station.

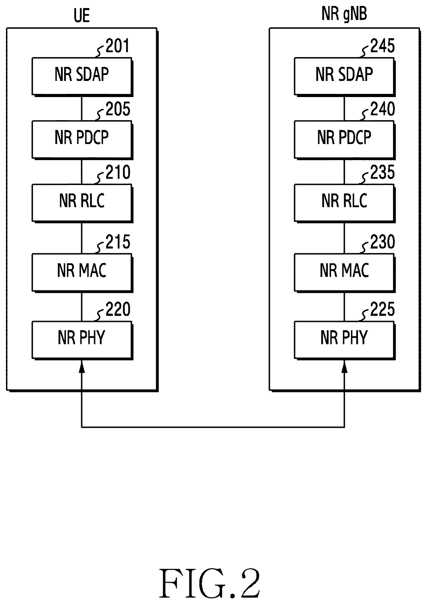

FIG. 2 illustrates a radio protocol structure of a wireless communication system according to various embodiments of the disclosure.

Referring to FIG. 2, a radio protocol of the wireless communication system may include an NR service data adaptation protocol (NR SDAP) 201 or 245, an NR packet data convergence protocol (NR PDCP) 205 or 240, an NR radio link control (NR RLC) 210 or 235, and an NR medium access controls (NR MAC) 215 or 230 on each of UE and NR NB sides.

The main functions of the NR SDAP 201 or 245 may include some of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SDAP PDUs

According to an embodiment, with regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 205 or 240 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer service data units (SDUs)
- Retransmission of PDCP SDUs
- Ciphering and deciphering
- Timer-based SDU discard in uplink

According to an embodiment, the reordering of the NR PDCP device may refer to a function of reordering PDCP PDU received from a lower layer in an order based on PDCP sequence numbers (SNs). According to an embodiment, the reordering of the NR PDCP device may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 210 or 235 may include some of functions below.
- Transfer of upper layer PDUs
- In-sequence delivery of upper layer PDUs
- Out-of-sequence delivery of upper layer PDUs
- Error correction through automatic repeat and request (ARQ)
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of, if there is a lost RLC PDU, delivering only RLC SDUs before the lost RLC PDU to the upper layer in sequence. According to an embodiment, the in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, may include a function of requesting retransmission of the lost RLC PDUs. may include a function of, if there is a lost RLC SDU, successively delivering only RLC SDUs before the lost RLC SDU to the upper layer, may include a function of, if a predetermined timer has expired although there is a lost RLC SDU, successively delivering all RLC SDUs received before the timer was started to the upper layer. or may include a function of, if a predetermined timer has expired although there is a lost RLC SDU, successively delivering all RLC SDUs received until now to the upper layer.

In addition, the in-sequence delivery of the NR RLC layer may process RLC PDUs in the received order(regardless of the sequence number order, in the order of arrival) and deliver same to the PDCP device regardless of the order (out-of-sequence delivery), and may, in the case of segments, receive segments which are stored in a buffer or which are to be received later, reconfigure same into one complete RLC PDU, and then process and deliver same to the PDCP device. According to an embodiment, the NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order. The out-of-sequence delivery may include a function of, if one original RLC SDU is segmented into multiple RLC SDUs and the segmented RLC SDUs are received, reassembling the RLC SDUs and delivering the reassembled RLC SDUs, or may include a function of storing the RLC SN or PDCP SN of received RLC PDUs, and recording RLC PDUs lost as a result of reordering.

The NR MAC 215 or 230 may be connected to multiple NR RLC layer devices configured in a single UE, and the main functions of the NR MAC may include some of functions below.
- Mapping between logical channels and transport channels
- Multiplexing/demultiplexing of MAC SDUs
- Scheduling information reporting
- Error correction through hybrid ARQ (HARQ)
- Priority handling between logical channels of one UE
- Priority handling between UEs by means of dynamic scheduling
- Multimedia broadcast and multicast services (MBMS) service identification)
- Transport format selection
- Padding

An NR PHY layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

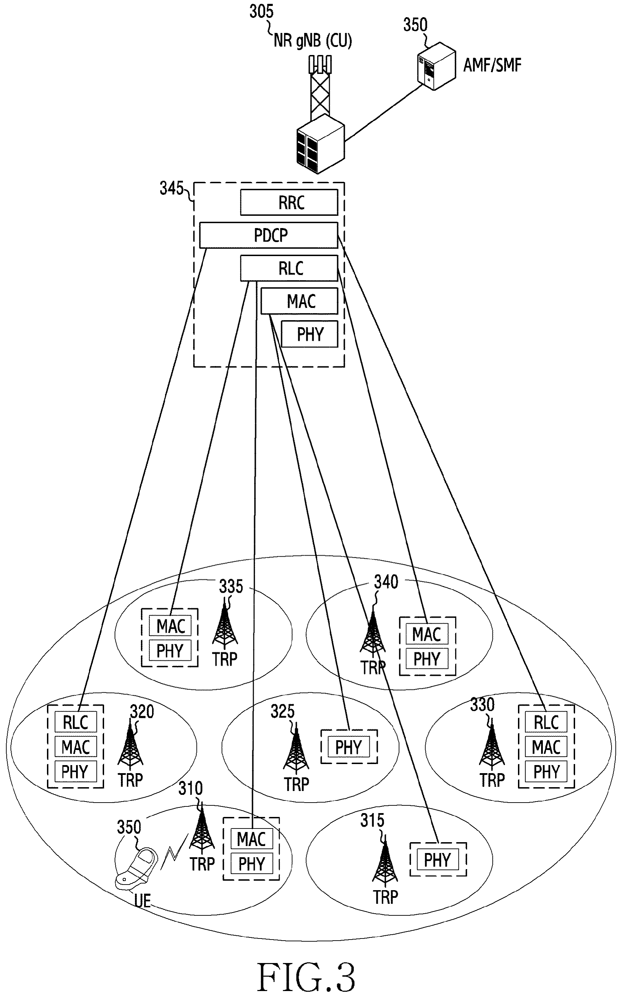

FIG. 3 illustrates another structure of a wireless communication system according to various embodiments of the disclosure.

Referring to FIG. 3, a cell serviced by an NR gNB 305 operating based on a beam may include multiple transmission reception points (TRPs) 310, 315, 320, 325, 330, 335, and 340.

According to an embodiment, the TRPs 310 to 340 may refer to a block obtained by separating some functions for transmitting/receiving physical signals from a conventional NR eNB, and may include multiple antennas. According to an embodiment, the NR gNB 305 may be represented as a central unit (CU), and the TRP may be represented as a distributed unit (DU).

According to an embodiment, functions of the NR gNB 305 and TRPs may be configured by separating respective layers from PDCP/RLC/MAC/PHY layers such as the block 345. That is, the TRPs may each include only a PHY layer and perform the functions of the corresponding layer (315 and 325), may each include only a PHY layer and an MAC layer and perform the functions of the corresponding layers (310, 335, and 340), or may each include only a PHY layer, an MAC layer, and an RLC layer and perform the functions of the corresponding layers (320 and 330),

Particularly, according to an embodiment, the TRPs 310 to 340 may use a beamforming technology in which multiple transmission/reception antennas are used to generate narrow beams in several directions and transmit/receive data therethrough. A UE 350 may access the NR gNB 305 and external networks through the TRPs 310 to 340.

According to an embodiment, in order to service users, the NR gNB 305 may collect state information, such as buffer states, available transmission power states, and channel states of UEs, and perform scheduling accordingly, and may support connections between the UEs and a core network (CN), particularly, access and mobility management function (AMF)/session management function (SMF) 350.

The TRP in the disclosure is described to have a structure (315 or 325) in which the functions of the corresponding layer can be performed by having only the PHY layer, but the disclosure is not limited thereto, and various embodiments can be implemented according to a TRP having various functions.

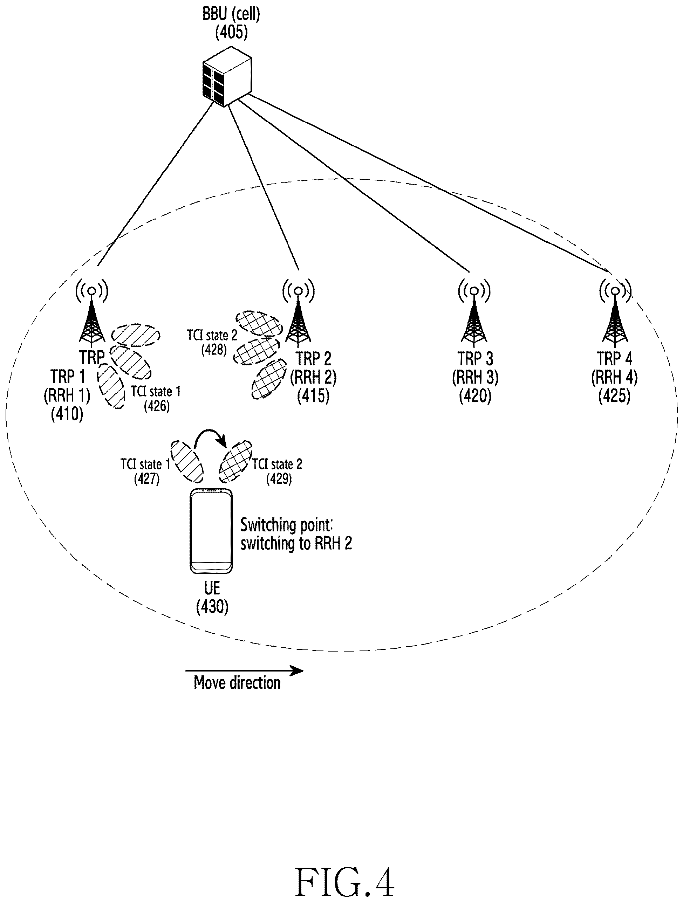

FIG. 4 illustrates a scenario in which a UE performs a beam change in a high speed train (HST) scenario according to various embodiments of the disclosure. More specifically, referring to FIG. 4, an operation for a UE to receive a beam change indication according to a change in the TRP/RRH in a high-speed train (HST) scenario is illustrated. However, according to various embodiments of the disclosure, the HST scenario is only an example, and various embodiments are applicable to any scenario related to the mobility of a UE.

According to an embodiment, referring to FIG. 4, a case in which a single cell (for example, a baseband unit (BBU) or a DU) 405 has a plurality of non-collocated remote radio heads (RRHs) or transmission and reception points (TRPs) (for example, RRH1/TRP1, RRH2/TRP2, RRH3/TRP3, and RRH4/TRP4) 410, 415, 420, and 425 is described, where the single cell refers to a cell having a single physical cell identity (ID) (PCI), and the RRH/TRPs in the cell may include units sharing the corresponding PCI. According to an embodiment, the HST scenario illustrated in FIG. 4 is applicable to a frequency range 2 (FR2) operation, and may include embodiments capable of supporting a UE 430 moving at a speed of approximately 350 km/h. In addition, various embodiments of the disclosure may support both unidirectional and bidirectional movement scenarios, and a maximum of four non-collocated RRHs/TRPs can be preferably supported in one cell.

An example of the scenario described in the following embodiments may include a case in which, in the above-described HST situation, when a non-collocated RRH/TRP is installed and a UE (e.g., a UE in a high-speed railway) 430 moves at a high speed along a predetermined moving direction, it is necessary to change from a currently supporting RRH/TRP (RRH1/TRP1) 410 to another RRH/TRP in the same cell according to the service supporting area of the RRH/TRP. In this case, for effective data transmission and reception, the beam (TCI state 1) 426 or 427 of the RRH/TRP used in existing data transmission and reception needs to be changed to the beam (TCI state 2) 428 or 429 for the changed RRH/TRP.

According to an embodiment, basically, a beam change for physical downlink control channel (PDCCH) reception can be indicated, and a beam change for a physical downlink shared channel (PDSCH)/physical uplink control channel (PUCCH)/physical uplink shared channel (PUSCH) can be also performed thereafter.

According to various embodiments of the disclosure, a method for supporting an operation in which a timing advance (TA) is updated together when beam changing is performed from the beam (TCI state 1) 426 or 427 of the RRH/TRP used in data transmission and reception to the beam (TCI state 2) 428 or 429 of a changed RRH/TRP is described.

According to an embodiment, in the above-described HST scenario, if the UE receives a configuration such as highSpeedLargeOneSteptUL-TimingFR2 below, the UE may activate a function of adjusting an uplink TA in FR2 by the UE itself at once. However, in case that the corresponding feature (or configuration) is not indicated, the UE may adjust the uplink TA only by the existing random access-based scheme. According to an embodiment, the above-described function may be supported only for a UE that reports the corresponding capability as a UE capability.

In addition, according to an embodiment, the above-described operation of adjusting the uplink TA at once may be performed when a time difference of downlink signals is measured by the UE, and the corresponding measurement value exceeds a pre-configured threshold.

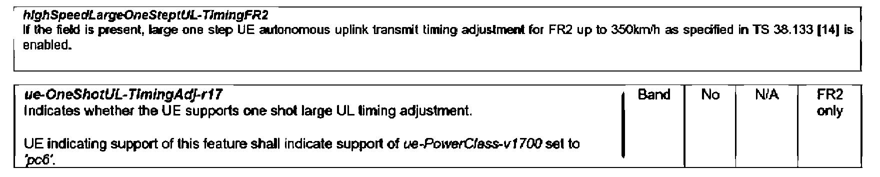

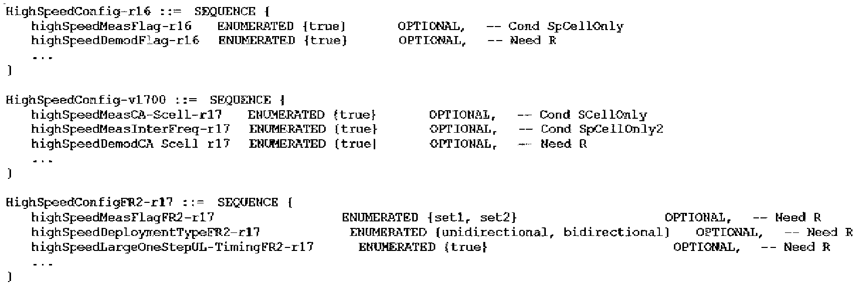

According to embodiments of the disclosure, the above-described HST scenario in FIG. 4, specifically, the methods for receiving both indications of a beam change and an uplink TA change and performing the corresponding operations when a UE and a transmission/reception entity perform beam switching to other non-collocated RRHs/TRPs, are described as examples.

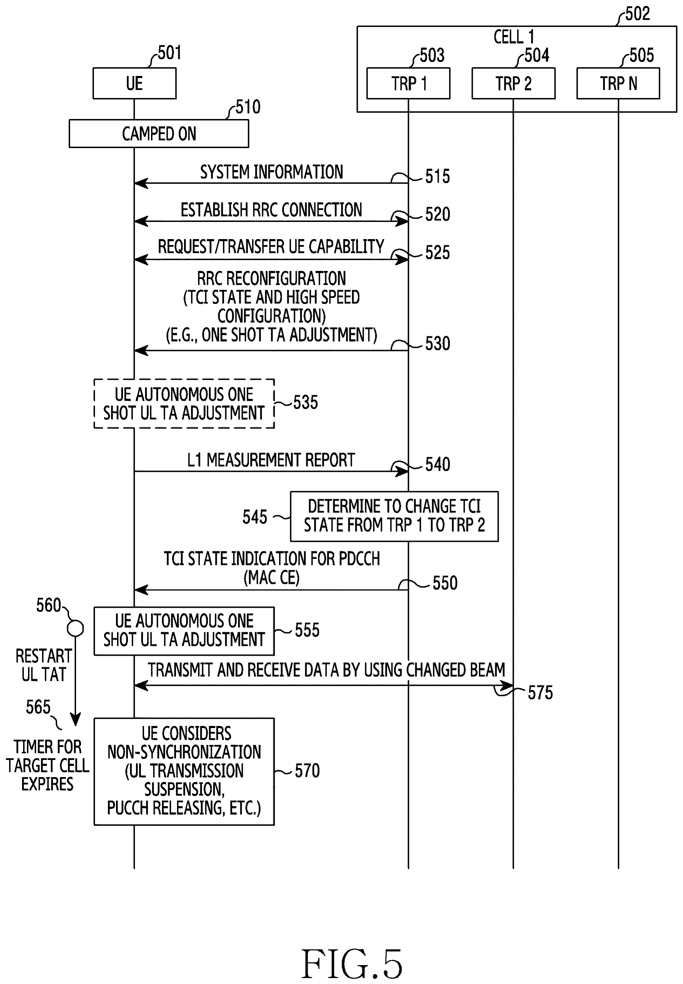

FIG. 5 illustrates a flow of signals for a UE to automatically adjust an uplink timing advance (TA) according to various embodiments of the disclosure. More specifically, referring to FIG. 5, a procedure in which a UE automatically adjusts an uplink TA when the UE receives an indication of a beam change due to a change in an RRH/TRP is illustrated. According to various embodiments, the overall operation of an example in which multiple RRHs/TRPs 503, 504, and 505 exist in one cell 502 is described in FIG. 5.

In steps 515 and 520, a UE 501 may receive system information from cell 1 502 in a camped-on state 510, and may perform a procedure of transition to a connected state.

Thereafter, in step 525, the serving cell 502 may request UE capability (e.g., a UE capability enquiry message) from the UE, and the UE may receive the UE capability in response to the base station's request and transmit the same (e.g., a UE capability information message) to the base station. According to an embodiment, a UE capability report may include at least one of a capability indicating whether an HST scenario is supported, a capability indicating whether uplink timing adjustment can be performed in one step (one step UL timing adjustment, ue-OneShotUL-TimingAdj), or in addition to UE capability, a capability indicating whether uplink timing adjustment can be performed in one step according to an indication of a TCI state activation MAC CE (one step UL timing adjustment after indicated by MAC CE) (i.e., a newly introduced UE capability support information-related IE). Alternatively, according to an embodiment, the capability indicating whether uplink timing adjustment can be performed in one step may also include the capability indicating whether uplink timing adjustment can be performed in one step according to the indication of the TCI state activation MAC CE. That is, a new UE capability information element (IE) may not be added based on an existing UE capability IE. The UE may transfer the above-described UE capabilities through at least one signaling of UE-specific capability, band-specific capability, or band-combination-specific capability.

For example, in case that the above-described UE capability is introduced, the following operations may be performed according to the UE capability.

### - Situation 1: Existing UE capability support + new UE capability support

When receiving a MAC CE indicating TCI change and one shot TA adjustment, the UE performs one shot TA adjustment.

### - Situation 2: Existing UE capability support + no new UE capability support

The UE monitors a received time difference (RTD) and performs a one-shot TA adjustment operation according to a triggering condition.

### - Situation 3: No existing UE capability support + no new UE capability support

The UE performs TA updating only according to the existing random access channel (RACH) procedure.

### - Situation 4: No existing UE capability support + new UE capability support

The corresponding operation is excluded from the HST scenario (i.e., a new UE capability may be specified as a condition in which the existing UE capability is a premise).

In step 530, the UE may receive, from the cell 502 supporting HST, an RRC configuration including a configuration related to HST scenario support, a TCI state configuration, and the like. The configuration received by the UE may include at least one of a TCI state-related configuration and an HST-related configuration (e.g., at least one of an HST measurement method type, an HST deployment type (unidirectional or bidirectional), or a configuration indicating activation of an operation in which TA is adjusted by a single procedure in HST). According to an embodiment, in particular, the configuration indicating activation of the operation of adjusting the TA in a single procedure may be a configuration that needs to be enabled for the operation of activating a TCI state via a MAC CE and simultaneously updating the uplink TA, among the contents of the embodiments to be described below in the disclosure, and for example, the corresponding operations may be performed only when the base station activates the corresponding function. The above-described configuration may be configured only for a UE supporting the function above according to the UE capability report.

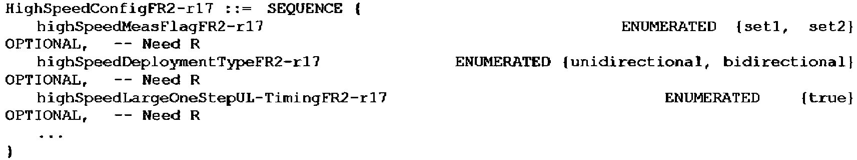

According to an embodiment, in particular, if the operation of adjusting a TA by a single procedure in the HST is activated, two operations below may be supported.

**First one shot TA adjustment operation:** Even without separate base station signaling, the UE may measure a downlink signal, and if the measurement value satisfies a condition for triggering the operation (e.g., if the received time difference (RTD) is greater than a specific threshold), the UE may automatically perform the corresponding operation. That is, the UE may automatically adjust the uplink TA, based on the RTD of the received downlink signals.

**Second one shot TA adjustment operation:** The base station may indicate to the UE to perform uplink TA adjustment at once through a MAC CE (e.g., TCI state activation and a new indicator). In this method, the UE may also automatically perform uplink TA adjustment, based on the RTD of the downlink signals received by the UE.

In step 535, the UE having received the above-described configuration, particularly the HST-related configuration, from the base station may perform the first one shot TA adjustment operation. That is, even without separate base station signaling, when the corresponding condition is satisfied, the UE may perform uplink TA adjustment autonomously while measuring a received signal.

In step 540, the UE may perform measurement on the L1 measurement resource according to the received RRC configuration, and report the measurement result to the base station (e.g., the serving cell 502). The L1 measurement report described above may be performed according to a scheme (e.g., periodic reporting, aperiodic reporting, or single reporting) configured by the base station.

In step 545, the base station having received the L1 measurement report may determine a beam change (for example, a beam change from TRP 1 503 (that is, TRP 1-related) to TRP 2 504 (that is, TRP 2-related)) based on the L1 measurement values for each measured beam.

In step 550, in order to indicate, to the UE, whether a beam change corresponds to a beam change to different RRHs/TRPs, the base station may indicate, through a MAC CE indicating TCI state change for PDCCH reception, whether a beam is changed. According to an embodiment, the second one shot TA adjustment operation may be indicated to the UE by the base station through the MAC CE.

That is, in case that one shot TA adjustment is indicated through the MAC CE for indicating TCI state change for PDCCH reception, the following two operations may be performed.

**Option 1:** A MAC CE is used to indicate to a UE whether a beam change is a beam change within a TRP/RRH or a beam change between TRPs/RRHs. In step 555, regardless of the indication in the MAC CE, if the condition for triggering the corresponding operation described in the first one shot TA adjustment above (e.g., if the received time difference (RTD) is greater than a specific threshold) is satisfied, the UE may automatically perform an uplink TA adjustment, based on the RTD of the received downlink signals.

**Option 2:** If the UE has received an indication of the MAC CE, the UE may perform uplink TA adjustment automatically, based on the RTD of the received downlink signals, regardless of the condition for triggering the corresponding operation in the first one shot TA adjustment described above. That is, in step 555, the base station may indicate one-shot TA adjustment to the UE through MAC CE signaling, and the UE may operate accordingly.

The UE may perform the one shot TA operation in step 555, upon receiving the MAC CE indicating one shot TA adjustment at the same time of changing the TCI state in step 550.

In step 560, the UE may restart the uplink TA timer as the TA is changed. For example, this may include an operation of restarting a TA timer that has been provided by an existing RRC configuration as the uplink TA is updated. In this case, the timer restart time point may include at least one of a time point in step 550, a time point in step 555, and a time point after step 555, at which the UE notifies the base station that the uplink TA update has been completed upon the completion of the one shot TA operation.

According to an embodiment, alternatively, even though the uplink TA update operation is performed according to the one shot TA operation, the existing TA timer in operation may continue to be maintained. This is because the UE and the base station may not be able to share information on the exact timing at which the TA is updated, and therefore, maintaining and managing the existing timer is more helpful for accurate TA timer management.

According to an embodiment, in addition, when the UE receives a MAC CE indicating both the TCI state change and the one shot TA adjustment in step 550, the UE may stop uplink transmission. According to an embodiment, the TA timer may also be stopped as the corresponding uplink transmission stops. In this case, a PDCCH (e.g., including an uplink grant) received by the UE before the completion of the new uplink TA adjustment may be ignored. Alternatively, the time in which the above operation is performed may be defined as about Xms.

In case that the corresponding uplink TA timer is expired in step 565, in step 570, the UE may perform an operation according to the expiry of the existing uplink TA timer. That is, the UE may determine that the uplink is not synchronized, and perform operations in case that the uplink is not synchronized (e.g., releasing a PUCCH/sounding reference signal (SRS), HARQ buffer flush, and the like). More specific operations will be described below.

| | | |
|---|---|---|
| 1> when a *timeAlignmentTimer* expires: | | |
| | 2> if the *timeAlignmentTimer* is associated with the PTAG: | |
| | | 3> flush all HARQ butters for all Serving Cells; |
| | | 3> notify RRC to release PUCCH for all Serving Cells, if configured; |
| | | 3> notify RRC to release SRS for all Serving Cells, if configured; |
| | | 3> clear any configured downlink assignments and configured uplink grants; |
| | | 3> clear any PUSCH resource for semi-persistent CSI reporting; |
| | | 3> consider all running *timeAlignmentTimers* as expired; |
| | | 3> maintain N_{TA} (defined in TS 38.211 [8]) of all TAGs. |

According to an embodiment, the serving cell may identify the expiry of the uplink TA timer or the like, and if necessary, may trigger again the random access to the UE through a PDCCH order, thereby performing an operation of re-aligning the uplink synchronization of the UE.

In step 575, the UE may perform data transmission and reception through the changed beam.

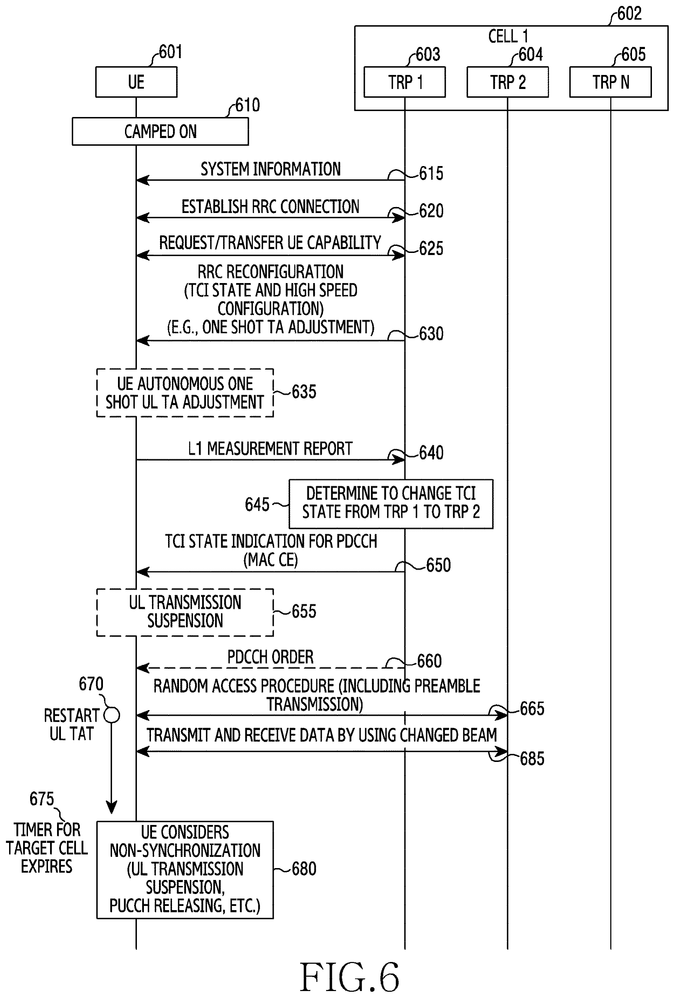

FIG. 6 illustrates a flow of signals for triggering random access and adjusting an uplink TA by a UE according to various embodiments of the disclosure. More specifically, referring to FIG. 6, a procedure for triggering random access according to the base station's indication to adjust an uplink TA in case that a beam change according to an RRH/TRP change is indicated to the UE is illustrated.

In steps 615 and 620, a UE 601 may receive system information from cell 1 602 in camped-on state 610 and perform a procedure of transition to a connected state.

Thereafter, in step 625, the serving cell 602 may request UE capability (e.g., a UE capability enquiry message) from the UE, and the UE may receive the UE capability in response to the base station's request and transmit the same (e.g., a UE capability information message). According to an embodiment, a UE capability report may include at least one of a capability indicating whether an HST scenario is supported, a capability indicating whether uplink timing adjustment can be performed in one step (one step UL timing adjustment, ue-OneShotUL-TimingAdj), or in addition to UE capability, a capability indicating whether uplink timing adjustment can be performed in one step according to an indication of a TCI state activation MAC CE (one step UL timing adjustment after indicated by MAC CE) (i.e., a newly introduced UE capability support information-related IE). Alternatively, according to an embodiment, the capability indicating whether uplink timing adjustment can be performed in one step may also include the capability indicating whether uplink timing adjustment can be performed in one step according to the indication of the TCI state activation MAC CE. That is, a new UE capability information element (IE) may not be added based on an existing UE capability IE. The UE may transfer the above-described UE capabilities through at least one signaling of UE-specific capability, band-specific capability, or band-combination-specific capability.

For example, in case that the above-described UE capability is introduced, the following operations may be performed according to the UE capability.

### - Situation 1: Existing UE capability support + new UE capability support

When receiving a MAC CE indicating TCI change and one shot TA adjustment, the UE performs one shot TA adjustment.

### - Situation 2: Existing UE capability support + no new UE capability support

The UE monitors a received time difference (RTD) and performs a one-shot TA adjustment operation according to a triggering condition.

### - Situation 3: No existing UE capability support + no new UE capability support

The UE performs TA updating only according to the existing random access channel (RACH) procedure.

### - Situation 4: No existing UE capability support + new UE capability support

The corresponding operation is excluded from the HST scenario (i.e., a new UE capability may be specified as a condition in which the existing UE capability is a premise).

In step 630, the UE may receive, from the cell 602 supporting HST, an RRC configuration including a configuration related to HST scenario support, a TCI state configuration, and the like. The configuration received by the UE may include at least one of a TCI state-related configuration and an HST-related configuration (e.g., at least one of an HST measurement method type, an HST deployment type (unidirectional or bidirectional), or a configuration indicating activation of an operation in which TA is adjusted by a single procedure in HST). According to an embodiment, in particular, the configuration indicating activation of the operation of adjusting the TA in a single procedure may be a configuration that needs to be enabled for the operation of activating a TCI state via a MAC CE and simultaneously updating the uplink TA, among the contents of the embodiments to be described below in the disclosure, and for example, the corresponding operations may be performed only when the base station activates the corresponding function. The above-described configuration may be configured only for a UE supporting the function above according to the UE capability report.

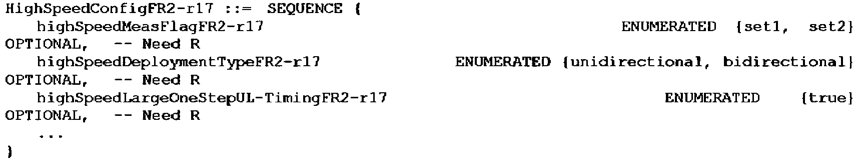

According to an embodiment, in particular, if the operation of adjusting a TA by a single procedure in the HST is activated, two operations below may be supported. With reference to FIG. 6, according to an embodiment, an operation based on a first one shot TA adjustment operation is described.

**First one shot TA adjustment operation:** Even without separate base station signaling, the UE may measure a downlink signal, and if the measurement value satisfies a condition for triggering the operation (e.g., if the received time difference (RTD) is greater than a specific threshold), the UE may automatically perform the corresponding operation. That is, the UE may automatically adjust the uplink TA, based on the RTD of the received downlink signals.

**Second one shot TA adjustment operation:** The base station may indicate to the UE to perform uplink TA adjustment at once through a MAC CE (e.g., TCI state activation and a new indicator). In this method, the UE may also automatically perform uplink TA adjustment, based on the RTD of the downlink signals received by the UE.

In step 635, the UE having received the above-described configuration, particularly the HST-related configuration, from the base station may perform the first one shot TA adjustment operation. That is, even without separate base station signaling, when the corresponding condition is satisfied, the UE may perform uplink TA adjustment autonomously while measuring a received signal.

In step 640, the UE may perform measurement on the L1 measurement resource according to the received RRC configuration, and report the measurement result to the base station (e.g., the serving cell 602). The L1 measurement report described above may be performed according to a scheme (e.g., periodic reporting, aperiodic reporting, or single reporting) configured by the base station.

In step 645, the base station having received the L1 measurement report may determine a beam change (for example, a beam change from TRP 1 603 (that is, TRP 1-related) to TRP 2 604 (that is, TRP 2-related)) based on the L1 measurement values for each measured beam.

In step 650, in order to indicate, to the UE, whether a beam change corresponds to a beam change to different RRHs/TRPs, the base station may indicate, through a MAC CE indicating TCI state change for PDCCH reception, whether a beam is changed.

That is, in case that one shot TA adjustment is indicated through the MAC CE indicating the TCI state change for PDCCH reception, the MAC CE may be used to indicate to the UE whether a beam change is a beam change within a TRP/RRH or a beam change between TRPs/RRHs. According to an embodiment, regardless of the indication in the MAC CE, if the condition for triggering the corresponding operation described in the first one shot TA adjustment above (e.g., if the received time difference (RTD) is greater than a specific threshold) is satisfied, the UE may automatically perform an uplink TA adjustment, based on the RTD of the received downlink signals (for example, step 655).

When the UE receives a MAC CE indicating both the TCI state change and whether the beam change is the beam change to different RRHs/TRPs in step 655, the UE may stop uplink transmission. According to an embodiment, the TA timer may also be stopped as the corresponding uplink transmission stops. In this case, a PDCCH (e.g., including an uplink grant) received by the UE before the completion of the new uplink TA adjustment may be ignored. Alternatively, the time in which the above operation is performed may be defined as about Xms.

In step 660, the UE may receive a PDCCH order from the serving cell 602.

In step 665, the UE may perform a random access operation to update the uplink TA. This operation may be performed simultaneously with or at a similar time to step 650 in order to reduce the interruption time. For example, a transfer or a transfer time constraint may exist in the same time point resource.

In step 670, as the TA is changed, the UE may restart an uplink TA timer, based on the random access operation. This may include an operation of restarting a TA timer provided as an existing RRC configuration as the uplink TA is updated.

In case that the corresponding uplink TA timer is expired in step 675, in step 680, the UE may perform an operation according to the expiry of the existing uplink TA timer. That is, the UE may determine that the uplink is not synchronized, and perform operations in case that the uplink is not synchronized (e.g., releasing a PUCCH/sounding reference signal (SRS), HARQ buffer flush, and the like. More specific operations will be described below.

| | | |
|---|---|---|
| 1> when a *timeAlignmentTimer* expires: | | |
| | 2> if the *timeAlignmentTimer* is associated with the PTAG: | |
| | | 3> flush all HARQ buffers for all Serving Cells; |
| | | 3> notify RRC to release PUCCH for all Serving Cells, if configured; |
| | | 3> notify RRC to release SRS for all Serving Cells, if configured; |
| | | 3> clear any configured downlink assignments and configured uplink grants; |
| | | 3> clear any PUSCH resource for semi-persistent CSI reporting; |
| | | 3> consider all running *timeAlignmentTimers* as expired; |
| | | 3> maintain N_{TA} (defined in TS 38.211 [8]) of all TAGs. |

According to an embodiment, the serving cell may identify the expiry of the uplink TA timer or the like, and if necessary, may trigger again the random access to the UE through a PDCCH order, thereby performing an operation of re-aligning the uplink synchronization of the UE.

In step 685, the UE may perform data transmission and reception through the changed beam.

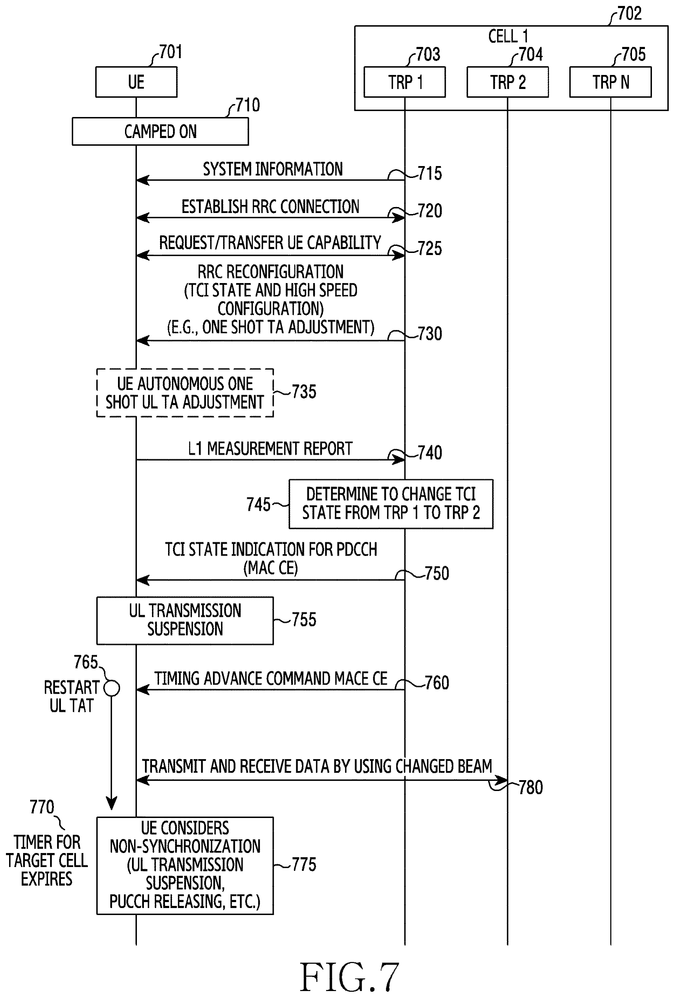

FIG. 7 illustrates a flow of signals for simultaneously performing beam changing and uplink TA adjustment by a UE according to various embodiments of the disclosure. More specifically, referring to FIG. 7, a procedure in which the UE receives an indication of an uplink TA from a base station when receiving a beam change according to an RRH/TRP change, and performs the adjustment is illustrated.

In steps 715 and 720, a UE 701 may receive system information from cell 1 702 in camped-on state 710 and perform a procedure of transition to a connected state.

Thereafter, in step 725, the serving cell 702 may request UE capability (e.g., a UE capability enquiry message) from the UE, and the UE may receive the UE capability in response to the base station's request and transmit the same (e.g., a UE capability information message). According to an embodiment, a UE capability report may include at least one of a capability indicating whether an HST scenario is supported, a capability indicating whether uplink timing adjustment can be performed in one step (one step UL timing adjustment, ue-OneShotUL-TimingAdj), or in addition to UE capability, a capability indicating whether uplink timing adjustment can be performed in one step according to an indication of a TCI state activation MAC CE (one step UL timing adjustment after indicated by MAC CE) (i.e., a newly introduced UE capability support information-related IE). Alternatively, according to an embodiment, the capability indicating whether uplink timing adjustment can be performed in one step may also include the capability indicating whether uplink timing adjustment can be performed in one step according to the indication of the TCI state activation MAC CE. That is, a new UE capability information element (IE) may not be added based on an existing UE capability IE. The UE may transfer the above-described UE capabilities through at least one signaling of UE-specific capability, band-specific capability, or band-combination-specific capability.

For example, in case that the above-described UE capability is introduced, the following operations may be performed according to the UE capability.

### - Situation 1: Existing UE capability support + new UE capability support

When receiving a MAC CE indicating TCI change and one shot TA adjustment, the UE performs one shot TA adjustment.

### - Situation 2: Existing UE capability support + no new UE capability support

The UE monitors a received time difference (RTD) and performs a one-shot TA adjustment operation according to a triggering condition.

### - Situation 3: No existing UE capability support + no new UE capability support

The UE performs TA updating only according to the existing random access channel (RACH) procedure.

### - Situation 4: No existing UE capability support + new UE capability support

The corresponding operation is excluded from the HST scenario (i.e., a new UE capability may be specified as a condition in which the existing UE capability is a premise).

In step 730, the UE may receive, from the cell 702 supporting HST, an RRC configuration including a configuration related to HST scenario support, a TCI state configuration, and the like. The configuration received by the UE may include at least one of a TCI state-related configuration and an HST-related configuration (e.g., at least one of an HST measurement method type, an HST deployment type (unidirectional or bidirectional), or a configuration indicating activation of an operation in which TA is adjusted by a single procedure in HST). According to an embodiment, in particular, the configuration indicating activation of the operation of adjusting the TA in a single procedure may be a configuration that needs to be enabled for the operation of activating a TCI state via a MAC CE and simultaneously updating the uplink TA, among the contents of the embodiments to be described below in the disclosure, and for example, the corresponding operations may be performed only when the base station activates the corresponding function. The above-described configuration may be configured only for a UE supporting the function above according to the UE capability report.

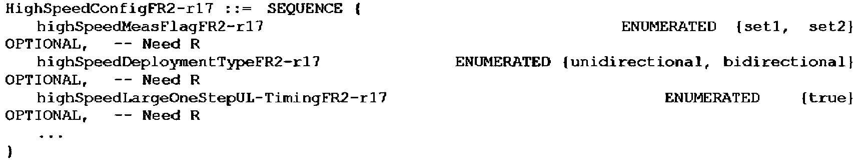

According to an embodiment, in particular, if the operation of adjusting a TA by a single procedure in the HST is activated, two operations below may be supported. With reference to FIG. 7, according to an embodiment, an operation based on a first one shot TA adjustment operation is described.

**First one shot TA adjustment operation:** Even without separate base station signaling, the UE may measure a downlink signal, and if the measurement value satisfies a condition for triggering the operation (e.g., if the received time difference (RTD) is greater than a specific threshold), the UE may automatically perform the corresponding operation. That is, the UE may automatically adjust the uplink TA, based on the RTD of the received downlink signals.

**Second one shot TA adjustment operation:** The base station may indicate to the UE to perform uplink TA adjustment at once through a MAC CE (e.g., TCI state activation and a new indicator). In this method, the UE may also automatically perform uplink TA adjustment, based on the RTD of the downlink signals received by the UE.

In step 735, the UE having received the above-described configuration, particularly the HST-related configuration, from the base station may perform the first one shot TA adjustment operation. That is, even without separate base station signaling, when the corresponding condition is satisfied, the UE may perform uplink TA adjustment autonomously while measuring a received signal.

In step 740, the UE may perform measurement on the L1 measurement resource according to the received RRC configuration, and report the measurement result to the base station (e.g., the serving cell 702). The L1 measurement report described above may be performed according to a scheme (e.g., periodic reporting, aperiodic reporting, or single reporting) configured by the base station.

In step 745, the base station having received the L1 measurement report may determine a beam change (for example, a beam change from TRP 1 703 (that is, TRP 1-related) to TRP 2 704 (that is, TRP 2-related)) based on the L1 measurement values for each measured beam.

In step 750, in order to indicate, to the UE, whether a beam change corresponds to a beam change to different RRHs/TRPs, the base station may indicate, through a MAC CE indicating TCI state change for PDCCH reception, whether a beam is changed.

That is, in case that one shot TA adjustment is indicated through the MAC CE indicating the TCI state change for PDCCH reception, the MAC CE may be used to indicate to the UE whether a beam change is a beam change within a TRP/RRH or a beam change between TRPs/RRHs. According to an embodiment, regardless of the indication in the MAC CE, if the condition for triggering the corresponding operation described in the first one shot TA adjustment above (e.g., if the received time difference (RTD) is greater than a specific threshold) is satisfied, the UE may automatically perform an uplink TA adjustment, based on the RTD of the received downlink signals (for example, step 755).

When the UE receives a MAC CE indicating both the TCI state change and whether the beam change is the beam change to different RRHs/TRPs in step 755, the UE may stop uplink transmission. According to an embodiment, the TA timer may also be stopped as the corresponding uplink transmission stops. In this case, a PDCCH (e.g., including an uplink grant) received by the UE before the completion of the new uplink TA adjustment may be ignored. Alternatively, the time in which the above operation is performed may be defined as about Xms.

In step 760, the UE may receive a timing advanced command MAC CE (TA command MAC CE) from the serving cell 702 to update the uplink TA. For example, the UE may update with the TA included in the corresponding MAC CE. This operation may be performed simultaneously with or at a similar time to step 750 in order to reduce the interruption time. For example, a transfer or a transfer time constraint may exist in the same time point resource.

In step 765, as the TA is changed, the UE may restart an uplink TA timer. This may include an operation of restarting a TA timer provided as an existing RRC configuration as the uplink TA is updated.

In case that the corresponding uplink TA timer is expired in step 770, in step 775, the UE may perform an operation according to the expiry of the existing uplink TA timer. That is, the UE may determine that the uplink is not synchronized, and perform operations in case that the uplink is not synchronized (e.g., releasing a PUCCH/sounding reference signal (SRS), HARQ buffer flush, and the like. More specific operations will be described below.

| | | |
|---|---|---|
| 1> when a *timeAlignmentTimer* expires: | | |
| | 2> if the *timeAlignmentTimer* is associated with the PTAG: | |
| | | 3> flush all HARQ buffers for all Serving Cells; |
| | | 3> notify RRC to release PUCCH for all Serving Cells, if configured; |
| | | 3> notify RRC to release SRS for all Serving Cells, if configured; |
| | | 3> clear any configured downlink assignments and configured uplink grants; |
| | | 3> clear any PUSCH resource for semi-persistent CSI reporting; |
| | | 3> consider all running *timeAlignmentTimers* as expired; |
| | | 3> maintain N_{TA} (defined in TS 38.211 [8]) of all TAGs. |

According to an embodiment, the serving cell may identify the expiry of the uplink TA timer or the like, and if necessary, may trigger again the random access to the UE through a PDCCH order, thereby performing an operation of re-aligning the uplink synchronization of the UE.

In step 780, the UE may perform data transmission and reception through the changed beam.

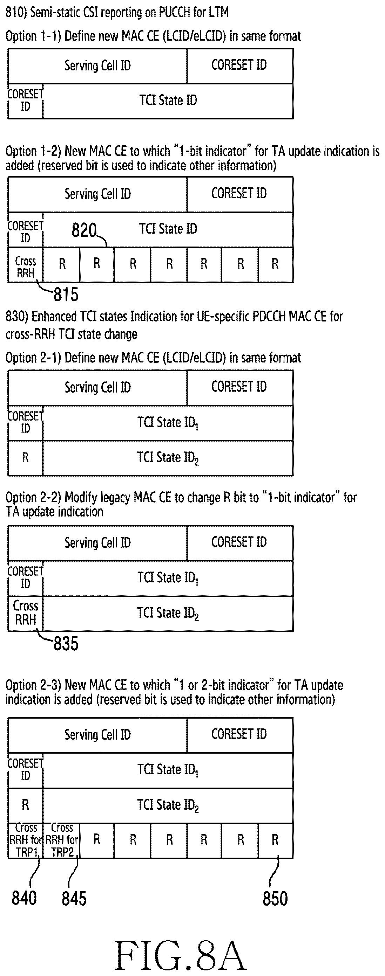

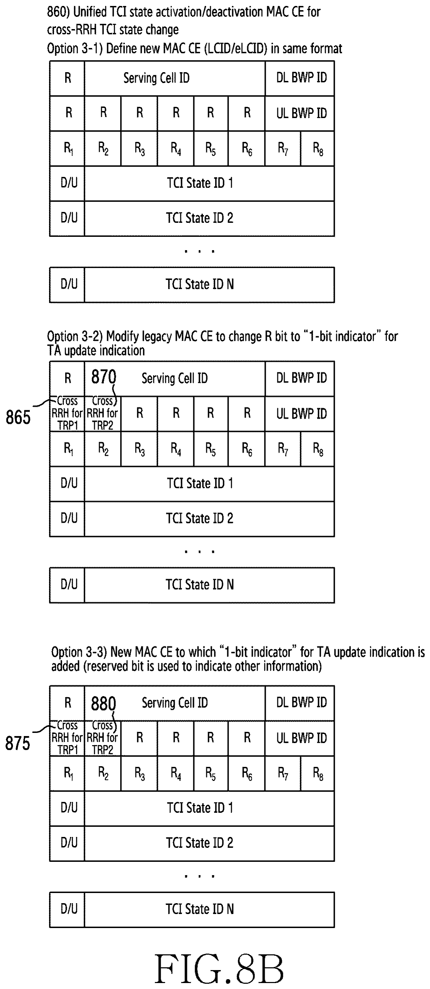

FIGS. 8A and 8B illustrate a MAC CE structure for updating an uplink TA together with a beam change according to various embodiments of the disclosure. More specifically, with reference to FIGS. 8A and 8B, a structure of a MAC CE transmitted by the base station to indicate, to the UE, an update of uplink TA together with a beam change according to an RRH/TRP change is illustrated. The MAC CE that indicates the TCI state change and one shot TA adjustment, newly proposed in the accompanying drawings, may be applied to the above-described embodiments.

The MAC CE according to various embodiments of the disclosure may indicate one shot TA adjustment through additional signaling, in addition to the existing MAC CE for activating the TCI state. To this end, a MAC CE to be applied and a specific structure of the MAC CE are described.

### 1) Type of applied TCI state activation MAC CE:

### A. PDCCH TCI state activation MAC CE

- Regarding the TCI state activation (indication) MAC CE for PDCCH reception by the UE, the UE may apply beam switching immediately after receiving the MAC CE, and thus this may be suitable for indicating cross-RRH beam change and uplink TA adjustment.

### B. PDSCH TCI state activation MAC CE

- Regarding the TCI state activation MAC CE for PDSCH reception by the UE, the UE may determine a beam to be applied when DCI is also received after the MAC CE is received, and thus such a MAC CE may not be suitable for indicating the cross-RRH beam change and uplink TA adjustment.

### 2) Applicable PDCCH TCI state activation MAC CE

### A. MAC CE indicating TCI state in PDCCH for cross-RRH beam change (810)

(TCI States Indication for UE-specific PDCCH MAC CE for Cross-RRH TCI state change)
- Option 1-1)
   - Introduce new NAC CE (e.g., apply new logical channel identifier (ID) (LCID) or enhanced LCID (eLCID))
   - Use existing format of TCI States Indication for UE-specific PDCCH MAC CE
   - Use LCID/eLCID as signaling for indication of one shot uplink TA adjustment
- Option 1-2)
   - Introduce new MAC CE (apply new LCID or eLCID)
   - Add new octet to existing format of TCI States Indication for UE-specific PDCCH MAC CE, and use new field (1-bit) 815 as signaling for indication of one shot uplink TA adjustment
   - Available to use reserved bits(R) 820 for other information
      * TA value indication
      * Applied RRH index or timing advance group (TAG) index

### B. MAC CE indicating TCI state in enhanced PDDCH for cross-RRH (830)

(Enhanced TCI States Indication for UE-specific PDCCH MAC CE for Cross-RRH TCI state change)
- Option 2-1)
   - Introduce new MAC CE (apply new LCID or eLCID)
   - Use existing format of TCI States Indication for UE-specific PDCCH MAC CE
   - Use LCID/eLCID as signaling for indication of one shot uplink TA adjustment
   - Simultaneously applied to two TCI states in MAC CE
- Option 2-2)
   - Modify existing MAC CE (change R bit to new field (cross RRH 835)
   - Use newly introduced field as signaling for indication of one shot uplink TA adjustment
   - Simultaneously applied to two TCI states in MAC CE
- Option 2-3)
   - Introduce new MAC CE (apply new LCID or eLCID)
   - A new octet is added to the existing format of TCI States Indication for UE-specific PDCCH MAC CE, and a new field (1 to 2 bits)(840 or 845) is used as signaling for indication of one shot uplink TA adjustment. Each field is used as signaling for indication of one shot uplink TA adjustment for each TCI state (each TRP/RRH) according to an embodiment.
   - Available to use reserved bits(R) 850 for other information
      * TA value indication
      * Applied RRH index or TAG) index

### C. MAC CE indicating unified TCI state for cross-RRH (860)

(Unified TCI States Activation/Deactivation MAC CE for Cross-RRH TCI state change)
- Option 3-1)
   - Introduce new MAC CE (apply new LCID or eLCID)
   - Use existing of TCI States Indication for UE-specific PDCCH MAC CE
   - Use LCID/eLCID as signaling for indication of one shot uplink TA adjustment
   - If two TCI states exist in MAC CE, simultaneously applied to corresponding two TCI states
- Option 3-2)
   - Modify existing MAC CE (change R bit to new field (cross RRH for TRP1/TRP2 (865 or 870))
   - A newly introduced field is used as signaling for indication of one shot uplink TA adjustment. If two fields are introduced, each field is used as signaling for indication of one shot uplink TA adjustment for each TCI state (each TRP/RRH).
   - Available to use reserved bits for other information
      * TA value indication
      * Applied RRH index or TAG index
- Option 3-3)
   - Introduce new MAC CE (apply new LCID or eLCID)
   - A new octet is added to the existing format of Unified TCI States Activation/Deactivation MAC CE, and a new field (1-2 bits)(875 or 880) (Cross RRH for TRP1/TRP2) is used as signaling for indication of one shot uplink TA adjustment. According to an embodiment, if two fields are introduced, each field is used as signaling for indication of one shot uplink TA adjustment for each TCI state (each TRP/RRH).
   - Available to use reserved bits for other information
      * TA value indication
      * Applied RRH index or TAG index

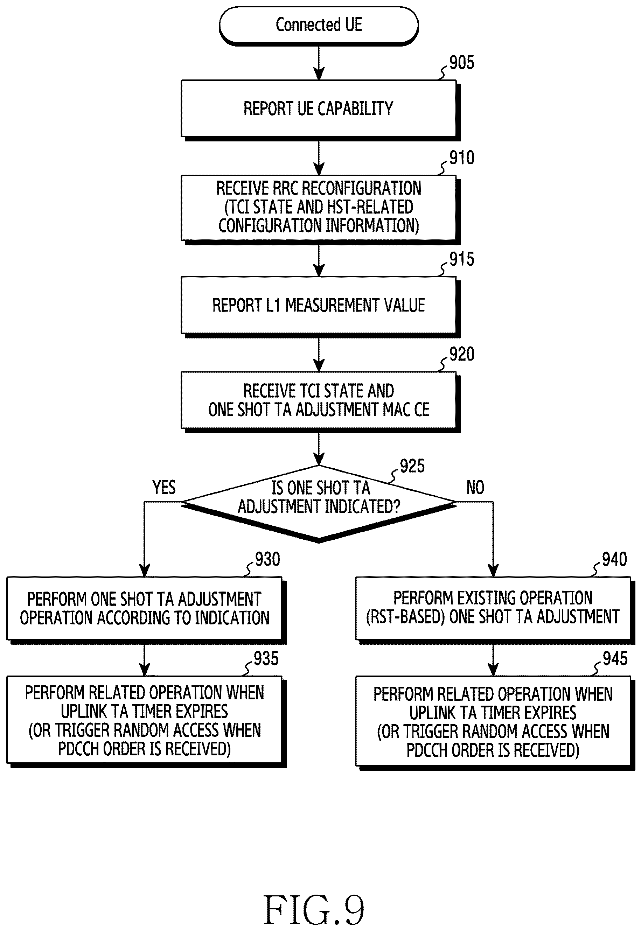

FIG. 9 is a flowchart illustrating an operation for adjusting an uplink TA by a UE according to various embodiments of the disclosure.

According to various embodiments of the disclosure, a UE operation may be applied to an example in which the UE supports an HST-related operation and a corresponding base station provides a related configuration, and in particular, the UE operation is described when the UE needs to simultaneously perform beam changing and uplink TA updating due to movement between TRPs/RRHs.

In step 905, a UE in a connected state may receive a request for UE capability information from a base station, and may then receive UE capability in response thereto and transfer the same. The UE capability information may include a UE capability related to HST support, and the detailed operation is described in FIGS. 5, 6, and 7.

In step 910, the UE in the connected state may receive, from the base station, an RRC configuration including an HST-related configuration. The configuration information received by the UE may include L1 measurement and reporting configuration, TCI state-related configuration, and basic common/dedicated configuration of the UE. The detailed configuration method and contents are described in detail in FIGS. 5, 6, and 7.

In step 915, the UE may report the L1 measurement value according to the configuration, and in this case, the measurement value may be used to determine beam changing. The serving cell may determine, based on the received measurement result, whether to change the beam of the UE and whether adjustment of the uplink TA is required in connection with an RRH change. The serving cell may transfer a MAC CE, which indicates TCI state change and one shot TA adjustment, to the UE, according to the determination.

In step 920, the UE may receive the MAC CE indicating the TCI state change and one shot TA adjustment. In step 925, the UE may determine whether a one shot TA adjustment indicator exists in the corresponding MAC CE and may perform a different operation.

In step 925, the UE may receive the MAC CE indicating a TCI state change and one shot TA adjustment. In case that the MAC CE received by the UE includes an indicator indicating one shot TA adjustment or a signaling method (for example, a new LCID/eLCID) indicating the same exists, the UE may perform a one shot TA adjustment operation, based on the received indication, in step 930. The detailed operation of the one shot TA adjustment operation is described in FIGS. 5, 6, and 7.

In step 935, the UE may perform an uplink TA-related maintaining operation, and if the TA timer expires, the existing uplink TA timer expiration operation may be performed. For example, the UE may perform operations such as PUCCH/SRS release and HARQ buffer flush. According to an embodiment, in this operation, the UE may receive a PDCCH order from the base station before an uplink TA timer is expired, and random access for obtaining a new uplink synchronization may be triggered.

In step 925, the UE may receive the MAC CE indicating the TCI state change and one shot TA adjustment. If the MAC CE received by the UE does not include an indicator indicating one shot TA adjustment, or if there is no signaling method (e.g., a new LCID/eLCID) indicating the same, the UE may perform the existing one shot TA adjustment operation in step 940. Here, the existing one shot TA adjustment operation may include a case in which when a specific condition is satisfied while a UE measures a downlink signal, monitors an RTD, and checks a triggering condition, the existing one shot TA adjustment operation is performed. The detailed operation of the one shot TA adjustment operation is described in FIGS. 5, 6, and 7.

In step 945, the UE may perform the uplink TA-related maintaining operation, and, if the TA timer expires, the UE may perform the existing uplink TA timer expiration operation. That is, the UE may perform operations such as PUCCH/SRS release and HARQ buffer flush. Alternatively, in this operation, the UE may receive a PDCCH order from the base station before the uplink TA timer is expired, and random access for obtaining a new uplink synchronization may be triggered.

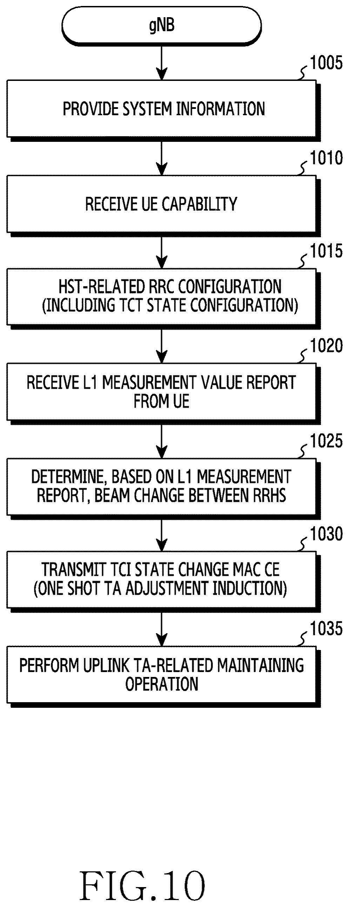

FIG. 10 is a flowchart illustrating an operation for adjusting an uplink TA of a UE by a base station according to various embodiments of the disclosure.

In step 1005, the base station may provide system information to the UE.

In step 1010, the base station may receive UE capability information from the UE in a connected state. The UE capability information may include a UE capability related to HST support, and the detailed operation is described in FIGS. 5, 6, and 7.

In step 1015, the base station may transfer an HST-related RRC configuration to the UE in a connected state (e.g., a UE supporting the HST function). The configuration transmitted by the base station may include a TCI state-related configuration and a basic common/dedicated configuration of the UE. The detailed configuration method and contents are described in detail in FIGS. 5, 6, and 7.

In step 1020, the base station may receive an L1 measurement value from the UE, and in this case, the measurement value may be used to determine beam changing. The serving cell may determine, based on the received measurement result, whether to change the beam of the UE and whether adjustment of the uplink TA is required in connection with an RRH change.

In step 1025, the base station may determine the beam change according to the L1 measurement report, and may determine an RRH to which the corresponding beam belongs, or whether an uplink TA change is required when the changing to the beam of the corresponding RRH is performed.

In step 1030, according to the determination of the above-described operation, the base station may include signaling for indicating whether one shot TA adjustment is to be performed in the MAC CE indicating beam change (TCI state change) according to various embodiments, and transfer the same to the UE. The detailed MAC CE structure and the detailed application operation are described in FIGS. 8A and 8B.

Thereafter, the base station may perform the uplink TA-related maintaining operation for the UE, which may include at least one of TA timer management, an uplink TA indication (e.g., a TAC MAC CE), or an operation for triggering random access for obtaining an uplink TA for the UE by using a PDCCH order for the UE.

According to various embodiments of the disclosure, the operations described in FIG. 9 or FIG. 10 are only examples, and are not limited thereto. According to various embodiments, the operations described above may include at least one of all of the operations, a part of the operations, or a combination of a part of the operations, and all of the operations may not be essential elements. For example, the UE and the base station may determine a beam change without UE capability information transmission and reception operations, or only the beam change operations of the UE and the base station may constitute a technical feature according to various embodiments of the disclosure.

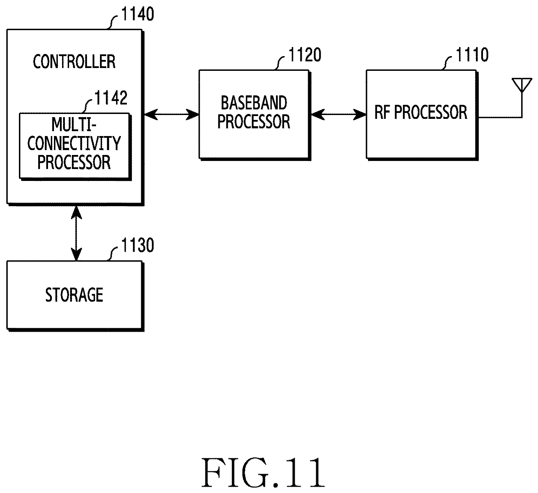

FIG. 11 illustrates a functional structure of a UE according to various embodiments of the disclosure.

Referring to FIG. 11, the UE may include a radio frequency (RF) processor 1110, a baseband processor 1120, a storage 1130, and a controller 1140.

The RF processor 1110 may perform a function for transmitting and receiving a signal via a wireless channel, such as band conversion and amplification of the signal. That is, the RF processor 1110 may up-convert a baseband signal provided from the baseband processor 1120 to an RF band signal, may transmit the same through an antenna, and may down-convert an RF band signal received through the antenna to a baseband signal. For example, the RF processor 1110 may include a transmission filter, a reception filter, an amplifier, a mixer, an oscillator, a digital-to-analog converter (DAC), an analog-to-digital converter (ADC), and the like. Although only one antenna is illustrated in FIG. 11, the UE may include multiple antennas. In addition, the RF processor 1110 may include multiple RF chains. Furthermore, the RF processor 1110 may perform beamforming. For the beamforming, the RF processor 1110 may adjust the phase and magnitude of each of signals transmitted and received through multiple antennas or antenna elements. In addition, the RF processor may perform MIMO, and may receive multiple layers when performing a MIMO operation.

The baseband processor 1120 may perform functions of conversion between baseband signals and bitstrings according to the system's physical layer specifications. For example, during data transmission, the baseband processor 1120 may encode and modulate a transmitted bitstring to generate complex symbols. In addition, during data reception, the baseband processor 1120 may demodulate and decode a baseband signal provided from the RF processor 1110 to restore a received bitstring. For example, when following the orthogonal frequency division multiplexing (OFDM) scheme, during data transmission, the baseband processor 1120 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, in case of data reception, the baseband processor 1120 may split a baseband signal provided from the RF processor 1110 at the OFDM symbol level, may restore signals mapped to subcarriers through a fast Fourier transform (FFT) operation, and may restore a received bitstring through demodulation and decoding.

The baseband processor 1120 and the RF processor 1110 may transmit and receive signals as described above. Therefore, the baseband processor 1120 and the RF processor 1110 may be referred to as a transmitter, a receiver, a transceiver, or a communication unit. Furthermore, at least one of the baseband processor 1120 and the RF processor 1110 may include multiple communication modules to support multiple different radio access technologies. In addition, at least one of the baseband processor 1120 and the RF processor 1110 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1130 stores basic programs, application programs, and data, such as configuration information, for operation of the main base station. In particular, the storage 1130 may store information related to the second access node, which performs wireless communication using the second wireless access technology. In addition, the storage 1130 provides the stored data at the request of the controller 1140.

The controller (or control unit) 1140 controls the overall operation of the UE. For example, the controller 1140 may transmit/receive signals through the baseband processor 1120 and the RF processor 1110. In addition, the controller 1140 records data in the storage 1130 and reads the data from the storage 1130. To this end, the controller 1140 may include at least one processor. For example, the controller 1140 may include a communication processor (CP) configured to perform control for communication, and an application processor (AP) configured to control upper layers such as application programs.

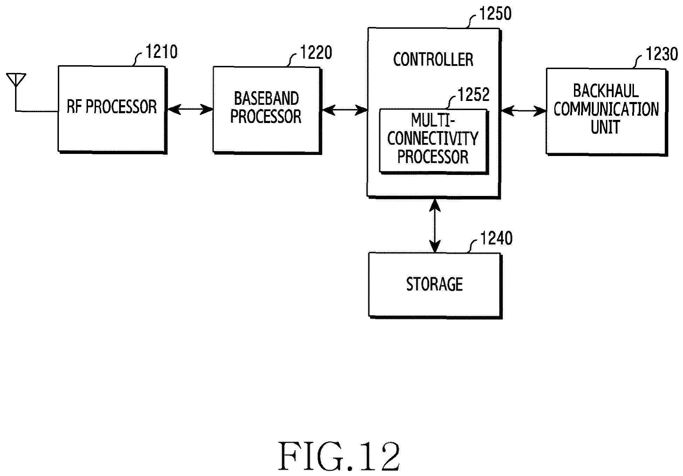

FIG. 12 illustrates a functional structure of a base station according to various embodiments of the disclosure.

As illustrated in FIG. 12, the base station includes an RF processor 1210, a baseband processor 1220, a backhaul communication unit 1230, a storage 1240, and a controller 1250.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a DAC, and an ADC. Although only one antenna is illustrated in FIG. 12, the first access node may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. The RF processor may transmit one or more layers to perform a downward MIMO operation.

The baseband processor 1220 may perform functions of conversion between baseband signals and bitstrings according to the physical layer specifications of a first radio access technology. For example, during data transmission, the baseband processor 1220 may encode and modulate a transmitted bitstring to generate complex symbols. In addition, during data reception, the baseband processor 1220 may demodulate and decode a baseband signal provided from the RF processor 1210 to restore a received bitstring. For example, when following the OFDM scheme, during data transmission, the baseband processor 1220 may encode and modulate a transmitted bitstring to generate complex symbols, may map the complex symbols to subcarriers, and may configure OFDM symbols through an IFFT operation and CP insertion. In addition, during data reception, the baseband processor 1220 may split a baseband signal provided from the RF processor 1210 at the OFDM symbol level, may restore signals mapped to subcarriers through FFT operation, and may restore a received bitstring through demodulation and decoding. The baseband processor 1220 and the RF processor 1210 may transmit and receive signals as described above. Therefore, the baseband processor 1220 and the RF processor 1210 may be referred to as a transmitter, a receiver, a transceiver, a communication unit, or a wireless communication unit.

The backhaul communication unit 1230 provides an interface for performing communication with other nodes in the network. That is, the backhaul communication unit 1230 may convert bitstrings transmitted from the main base station to other nodes (for example, auxiliary base station, core network) to physical signals, and may convert physical signals received from the other nodes to bitstrings.

The storage 1240 may store basic programs, application programs, and data, such as configuration information, for operation of the main base station. Particularly, the storage 1240 may store information regarding a bearer allocated to a connected UE, a measurement result reported from the connected UE, and the like. In addition, the storage 1240 may store information serving as a criterion to determine whether to provide multi-connectivity to a UE or to suspend same. In addition, the storage 1240 provides the stored data at the request of the controller 1250.

The controller (or control unit) 1250 controls the overall operation of the main base station. For example, the controller 1250 may transmit/receive signals through the baseband processor 1220 and the RF processor 1210 or through the backhaul communication unit 1230. In addition, the controller 1250 records data in the storage 1240 and reads the data from the storage 1234. To this end, the controller 1250 may include at least one processor.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A user equipment (UE) in a wireless communication system, the UE comprising:
a transceiver; and
a controller coupled to the transceiver,
wherein the controller is configured to:
receive, from a base station, a medium access control (MAC) control element (CE) for indicating a cross-remote radio head (RRH) transmission configuration indicator (TCI) state;
receive, from the base station, a physical downlink control channel (PDCCH) according to a TCI state indicated by the MAC CE; and
based on the MAC CE, perform an uplink (UL) timing adjustment after switching to the TCI state, and
wherein the MAC CE includes an identifier (ID) of the TCI state and an indicator indicating the UL timing adjustment.

2. The UE of claim 1, wherein the indicator indicating the UL timing adjustment indicates whether to apply the UL timing adjustment without identifying a threshold value for a downlink (DL) timing difference.

3. The UE of claim 1,
wherein a first octet and a second octet of the MAC CE include information associated with the TCI state,
wherein a third octet of the MAC CE includes the indicator indicating the UL timing adjustment, and
wherein the indicator indicating the UL timing adjustment comprises 1 bit.

4. The UE of claim 1, wherein the controller is further configured to:
transmit, to the base station, capability information indicating whether the UE supports one shot UL timing adjustment; and
receive, from the base station, information for configuring information for a high speed scenario.

5. A base station in a wireless communication system, the base station comprising:
a transceiver; and
a controller coupled to the transceiver,
wherein the controller is configured to:
transmit, to a user equipment (UE), a medium access control (MAC) control element (CE) for indicating a cross-remote radio head (RRH) transmission configuration indicator (TCI) state; and
transmit, to the UE, a physical downlink control channel (PDCCH) according to a TCI state indicated by the MAC CE,
wherein the MAC CE includes an identifier (ID) of the TCI state and an indicator indicating an UL timing adjustment, and
wherein the UL timing adjustment after switching to the TCI state is based on the MAC CE.

6. The base station of claim 5, wherein the indicator indicating the UL timing adjustment indicates whether to apply the UL timing adjustment without identifying a threshold value for a downlink (DL) timing difference.

7. The base station of claim 6,
wherein a first octet and a second octet of the MAC CE include information associated with the TCI state,
wherein a third octet of the MAC CE includes the indicator indicating the UL timing adjustment, and
wherein the indicator indicating the UL timing adjustment comprises 1 bit.

8. The base station of claim 5, wherein the controller is further configured to:
receive, from the UE, capability information indicating whether the UE supports one shot UL timing adjustment; and
transmit, to the UE, information for configuring information for a high speed scenario.

9. A method performed by a user equipment (UE) in a wireless communication system, the method comprising:
receiving, from a base station, a medium access control (MAC) control element (CE) for indicating a cross-remote radio head (RRH) transmission configuration indicator (TCI) state;
receiving, from the base station, a physical downlink control channel (PDCCH) according to a TCI state indicated by the MAC CE; and
based on the MAC CE, performing an uplink (UL) timing adjustment after switching to the TCI state,
wherein the MAC CE includes an identifier (ID) of the TCI state and an indicator indicating the UL timing adjustment.

10. The method of claim 9, wherein the indicator indicating the UL timing adjustment indicates whether to apply the UL timing adjustment without identifying a threshold value for a downlink (DL) timing difference.

11. The method of claim 9,
wherein a first octet and a second octet of the MAC CE include information associated with the TCI state,
wherein a third octet of the MAC CE includes the indicator indicating the UL timing adjustment, and
wherein the indicator indicating the UL timing adjustment comprises 1 bit.

12. The method of claim 9, further comprising:
transmitting, to the base station, capability information indicating whether the UE supports one shot UL timing adjustment; and
receiving, from the base station, information for configuring information for a high speed scenario.

13. A method performed by a base station in a wireless communication system, the method comprising:
transmitting, to a user equipment (UE), a medium access control (MAC) control element (CE) for indicating a cross-remote radio head (RRH) transmission configuration indicator (TCI) state; and
transmitting, to the UE, a physical downlink control channel (PDCCH) according to a TCI state indicated by the MAC CE,
wherein the MAC CE includes an identifier (ID) of the TCI state and an indicator indicating an UL timing adjustment, and
wherein the UL timing adjustment after switching to the TCI state is based on the MAC CE.

14. The method of claim 13, wherein the indicator indicating the UL timing adjustment indicates whether to apply the UL timing adjustment without identifying a threshold value for a downlink (DL) timing difference.

15. The method of claim 13,
wherein a first octet and a second octet of the MAC CE include information associated with the TCI state,
wherein a third octet of the MAC CE includes the indicator indicating the UL timing adjustment, and
wherein the indicator indicating the UL timing adjustment comprises 1 bit.
